# EUROPEAN PATENT SPECIFICATION

(11) **EP 3 647 550 B1**
(45) Date of publication and mention of the grant of the patent: **19.01.2022**
(21) Application number: 19200995.9
(22) Date of filing: 02.10.2019
(51) Int. Cl.: F01D 25/24

(54) **FAN CASE**
BLÄSERGEHÄUSE
BOÎTIER DE SOUFFLANT

(30) Priority: 02.11.2018 GB 201817934
(43) Date of publication of application: 06.05.2020
(73) Proprietor: Rolls-Royce plc, London N1 9FX (GB)
(72) Inventor: Cooper, Joseph, Derby, Derbyshire DE24 8BJ (GB); Rees, Geraint, Derby, Derbyshire DE24 8BJ (GB)
(74) Representative: Rolls-Royce plc

(56) References cited:
- US-A1- 2012 082 541
- US-A1- 2016 069 214
- US-A1- 2018 283 397

## Description

The present disclosure relates to a fan case for a gas turbine aircraft engine, a gas turbine engine for an aircraft and a method of replacing a fan case on a gas turbine engine of an aircraft. In particular, but not exclusively the fan case may typically be a rescue fan case for a single flight with no passengers.

Gas turbine aircraft engines comprise a propulsive fan arranged downstream of an air intake. The fan is surrounded by a fan case, and typically generates two separate airflows. A first airflow is received by a core of the engine, and a second airflow is received in a bypass duct. The core comprises one or more compressors, a combustor, and one or more turbines. The bypass duct is defined around the core.

In use, the core airflow is compressed by the compressors, mixed with fuel and combusted in the combustor. The combustion products are expanded through the turbine stages and exhausted through a core nozzle. The turbines drive the compressor stages and propulsive fan through one or more interconnecting shafts.

Typically, whilst some thrust is provided by the core nozzle, the majority of the thrust generated by the engine is provided by the propulsive fan, through the bypass duct. Propulsive efficiency of the gas turbine can be improved by increasing the bypass ratio (the ratio of the air mass flow through the bypass duct to the air mass flow through the core). The bypass ratio is related to the size of the fan which in turn is limited by the rotation speed of the fan, as a large fan rotating at high speed may experience unwanted distortion of the fan, and other effects.

If the fan is driven by a reduction gearbox, it can be driven at slower speeds than the shafts from the turbines. This enables the fan to be increased in size, facilitating an increase of the bypass duct ratio.

The size of engines with increased fan diameter makes delivery of the assembled engine, and some of the larger components such as the fan case, costly and difficult. In some situations, it can be necessary to replace the fan casing on an engine, for example if a blade off event has occurred and damaged the fan casing. Where the fan is very large, delivering a replacement fan casing to where it is needed may be impractical or impossible.

United States Patent Application US 2016/069214 A1 discloses a fan casing for a gas turbine engine in which the inner and outer walls of the casing is constructed from a plurality of segments that extend around the circumference of the gas turbine engine. United States Patent Application US 2012/082541 A1 discloses a gas turbine engine having a fan casing whose internal wall is made up of a number of segments, each segment having a nanocrystalline coating. United States Patent Application US 2018/283397 A1 discloses a gas turbine engine having a fan casing whose internal wall is made up of a number of segments, each segment having reinforced sections to help with containment.

The present disclosure provides a fan case, a gas turbine engine, and a method of replacing a fan case on a gas turbine engine of an aircraft, as set out in the appended claims.

According to a first aspect there is provided a fan case for a gas turbine aircraft engine, the fan case formed of an outer wall extending circumferentially around an axis and along the axis, and having a length along the axis, and a perimeter around the axis, wherein the fan case comprises two or more longitudinal segments configured to be assembled to form the outer wall, wherein each longitudinal segment includes a portion of the outer wall extending at least part of the length of the fan case and forming an incomplete portion of the perimeter of the fan case and characterised in that each longitudinal segment extends the full length of the fan case, and wherein the outer wall includes one or more strengthening ribs, each strengthening rib extending circumferentially around the axis.

The separate longitudinal segments are smaller than the assembled case and are thus easier to store and ship to remote locations, where the fan case may be required.

Each strengthening rib may be formed of two or more rib portions formed on the longitudinal segments. The rib portions on adjacent longitudinal segments may align to form the strengthening rib circumferentially around the axis.

The fan case may comprise outlet guide vanes extending radially inward from the outer wall of each longitudinal segment. Including the vanes as part of the fan case simplifies the process of replacing the fan case and vanes.

The fan case may comprise an inner wall portion at a radially inner end of the outlet guide vanes of each longitudinal segment. The inner wall portions of adjacent longitudinal segments may align to form an inner wall arranged radially within the outer wall. The inner wall may have a perimeter extending circumferentially around the axis and a length extending along the axis. Each inner wall portion may comprise an incomplete portion of the perimeter of the inner wall. The inner wall makes it straightforward to attach the fan case to the rest of the engine.

The fan case may comprise a continuous support ring arranged to hold the longitudinal segments together. The support ring may have a size corresponding to the inner wall, in a plane perpendicular to the axis. The ring helps to provide hoop continuity and thus strength to the assembled fan case.

The complete perimeter may be formed by three or more longitudinal segments. The fan case may comprise five longitudinal segments or less. Having more than two longitudinal segments ensures the longitudinal segments are small enough to ship, whilst having fewer than six longitudinal segments helps to strengthen the assembled case.

The longitudinal segments may form equally sized parts of the perimeter of the outer wall.

Each longitudinal segment may comprise flanges at opposing axially extending sides of the portion of the outer wall, for joining to adjacent longitudinal segments.

The outer wall may have a diameter of greater than 3.4 metres (134 inches). The outer wall may have a diameter of greater than 3.5 metres (around 137 inches). The outer wall may have a diameter of greater than 3.58 metres (around 141 inches). The diameter of the outer wall provides a high bypass duct ratio, and thus an efficient engine.

The fan case may comprise a rescue fan case for a single flight. Where a fan case requires replacement in a remote location, a rescue fan case can be used to enable the aircraft to fly back to a repair location, to allow installation of a permanent replacement fan case. The rescue fan case is typically intended for a single flight with no passengers.

According to a second aspect, there is provided a gas turbine engine for an aircraft comprising: an engine core comprising a turbine, a compressor, and a core shaft connecting the turbine to the compressor; a fan, the fan comprising a plurality of fan blades; a fan case according to the first aspect, arranged around the fan and at least partially defining a bypass duct between the fan case and the engine core; and a gearbox that receives an input from the core shaft and outputs drive to the fan so as to drive the fan at a lower rotational speed than the core shaft.

The turbine may be a first turbine, the compressor may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

According to a third aspect, there is provided a method of replacing a fan case of a gas turbine engine of an aircraft, comprising: transporting a rescue fan case according to the first aspect to a location of the aircraft; assembling the longitudinal segments to form the rescue fan case; and replacing a fan case of the gas turbine engine with the rescue fan case.

The method provides a simple way of recovering a gas turbine engine to a location for repair.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4A** illustrates a schematic view of the gas turbine engine of Figure 1, illustrating the separate modules of the engine;
**Figure 4B** illustrates the modules of Figure 4A, in exploded form;
**Figure 5A** illustrates an example of the fan case module of the gas turbine engine of Figure 4, from the front;
**Figure 5B** illustrates a perspective view of the fan case module of Figure 5A, from the front; and
**Figure 5C** illustrates a perspective view of the fan case module of Figure 5A, from the rear.

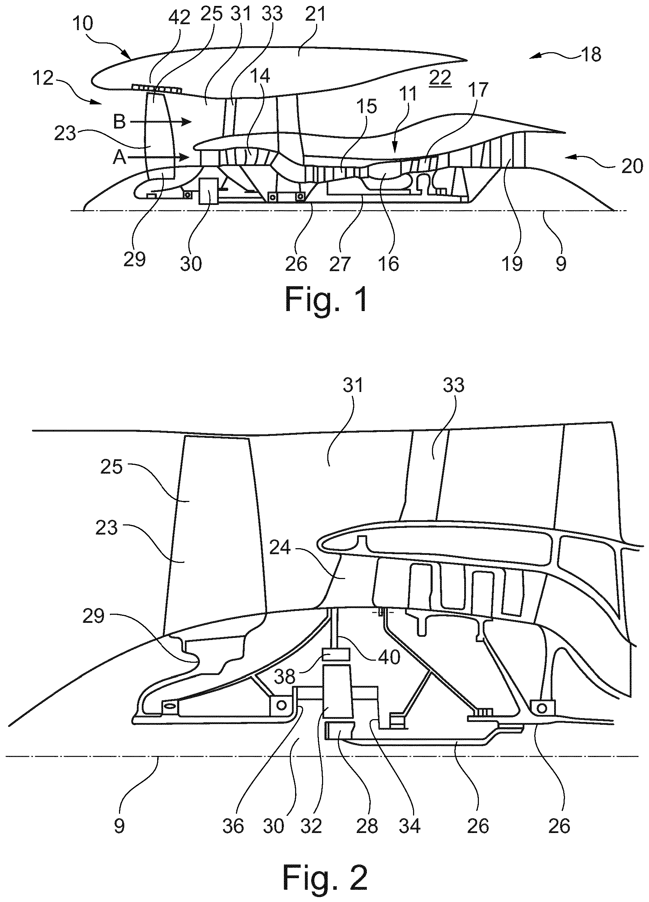

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. The fan 23 is attached to and driven by the low pressure turbine 19 via a shaft 26 and an epicyclic gearbox 30.

The propulsive fan 23 includes a plurality of fan blades 25 extending radially outward from a hub 29 mounted on an output shaft of the gearbox 30. The radially outer tips of the fan blades 25 are surrounded by a fan casing 42, which extends downstream behind the fan 23. The fan casing 42 will be discussed in more detail below. Behind the fan casing 42, in the axial flow direction (downstream), a nacelle 21 surrounds the engine core 11. The fan casing 42 and nacelle 21 define a bypass duct 22 and a bypass exhaust nozzle 18 around the engine core 11.

The bypass airflow B flows through the bypass duct 22. At an upstream end of the bypass duct 22, adjacent an intake 31 of the bypass duct 22, and downstream of the fan 23, a plurality of outlet guide vanes 33 extend radially between the engine core 11 and the fan casing 42. The outlet guide vanes 33 reduce swirl and turbulence in the bypass airflow B, providing improved thrust.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust through the bypass duct 22. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

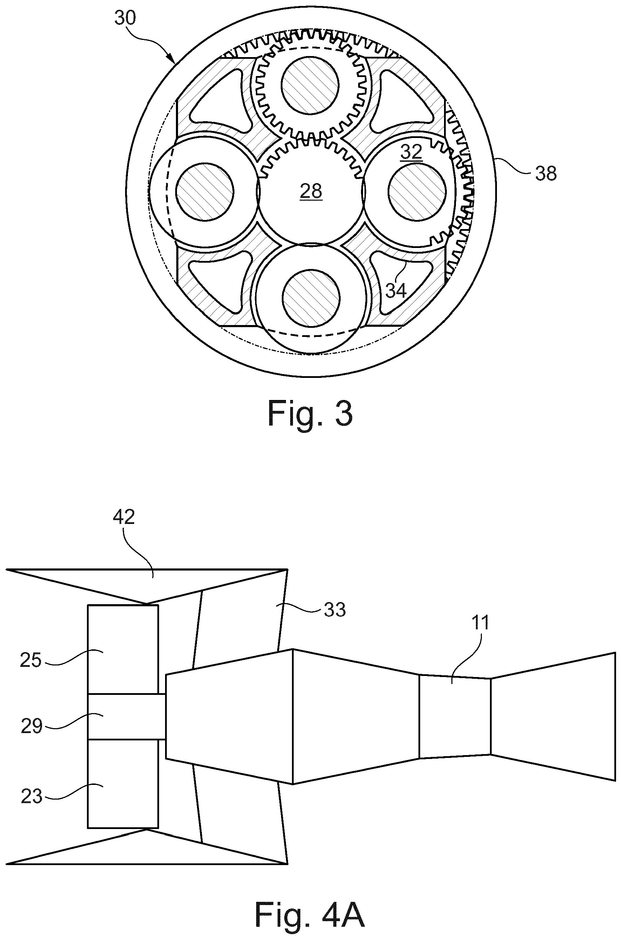

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. The gas turbine engine 10 may also be arranged in the "pusher" configuration, in which the fan 23 is located downstream of the core 11. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

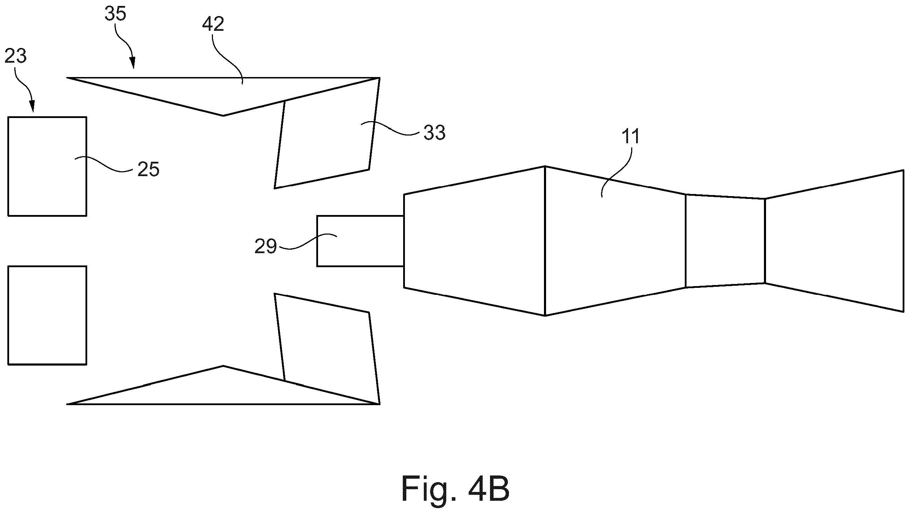

Figure 4A schematically illustrates the constituent components of the gas turbine engine 10 of Figures 1 to 3, with the nacelle 21 removed. As shown in Figure 4B, the gas turbine engine 10 is formed of a number of separate modules 11, 23, 35. The engine 10 may thus be considered modular.

The first module is an engine core module 11. This typically includes the gearbox 30, low pressure compressor 14, high-pressure compressor 15, combustion equipment 16, high-pressure turbine 17, and low pressure turbine 19. The engine core module can also be referred to as a propulsor. The second module, also referred to as the fan module 23, includes the fan blades 25. The third module 35 includes the fan case 42.

The outlet guide vanes 33 extend inwardly from the fan case 42, and typically form part of the fan case module 35. The hub 29 and gearbox 30 may be part of the fan module 23 or the engine core module 11. The gearbox 30 may additionally be configured as a separable module in its own right or part of the fan case module 35.

As shown in Figure 4B, the fan module 23 can be removed from the engine core module 11, and the engine core module 11 and fan case module 35 can be separated from one another. This facilitates easy delivery and transport of the engine 10, as the separate modules 11, 23, 35.

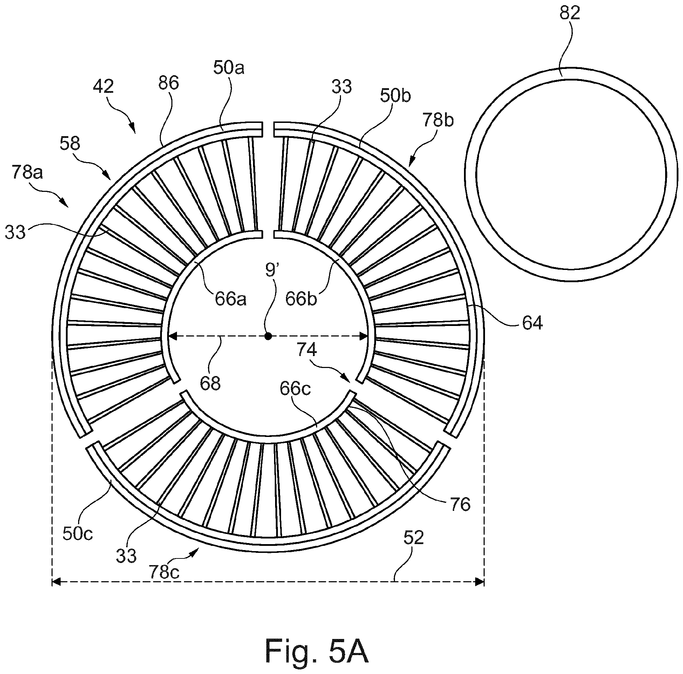

Figures 5A to 5C illustrate the fan case module 35 in more detail. The fan case 42 is formed by an annular outer wall 50 formed in a loop around an axis 9'. In the assembled engine 10 the axis 9' of the fan case 42 is coincident with the principal axis 9 of the engine 10.

The outer wall 50 has a diameter 52 perpendicular to the axis 9', and a length 54 extending from a first end 56a to a second end 56b, along the axis 9'. When viewed form the front, as in Figure 5A (or the rear), the outer wall 50 defines a perimeter 58 extending around the axis 9'.

The outer wall 50 defines a through passage 60 extending within the wall 50, along the axis 9'. Along the length 54 of the outer wall 50, the passage 60 is formed of two separate sections 62a,b. The front section 62a of the passage 60, adjacent the first end 56a of the outer wall 50 receives the fan blades 25, in the assembled engine 10. A liner material (not shown) or the like may be provided on a radially inner surface 64 of the outer wall 50. The liner may comprise a number of separate panels secured to the outer wall 50 by appropriate means. The diameter 52 of the outer wall 50 is such that the fan case 42 encases the blades 25 with minimal clearance between the blades 25 and liner.

The rear section 62b of the passage 60 is formed axially behind the front section 62a, adjacent the second end 56b of the outer wall 50. An inner wall 66 is formed in the rear section 62b.The inner wall 66 is arranged concentrically around the axis 9', and inside the outer wall 50.

The inner wall 66 is also annular and has a diameter 68 perpendicular to the axis 9', and a length 70 extending from a first end 72a to a second end 72b, along the axis 9'. When viewed form the front, as in Figure 5A (or the rear), the inner wall 66 defines a perimeter 74 extending around the axis 9'.

The first end 72a of the inner wall is formed partway along the length of the passage 60, whilst the second end 72b may be coincident with the second end 56b of the outer wall 50, along the axis 9'

The outlet guide vanes 33 extend between the inner surface 64 of the outer wall 50 and an outer surface 76 of the inner wall 66, in the rear section 62b of the passage 60. The outlet guide vanes 33 extend along at least part of the length of the inner wall 66.

The diameter 68 and length 70 of the inner wall 66 are arranged such that the inner wall 66 may be secured to the engine core 11, to form the assembled engine 10, as shown in Figure 4A. The outer wall 50 is typically also secured to the nacelle 21. Further support and/or stabilisation struts (not shown) may optionally be formed between the fan case 42 and the engine core 11, to provide further strength to the assembled engine 10.

In the example shown in Figures 5A to 5C, the fan case module 35 is formed of three separate segments 78a,b,c. Each segment comprises a portion 50a,b,c of the outer wall 50, a portion 66a,b,c of the inner wall 66 and a subset of the outlet guide vanes 33.

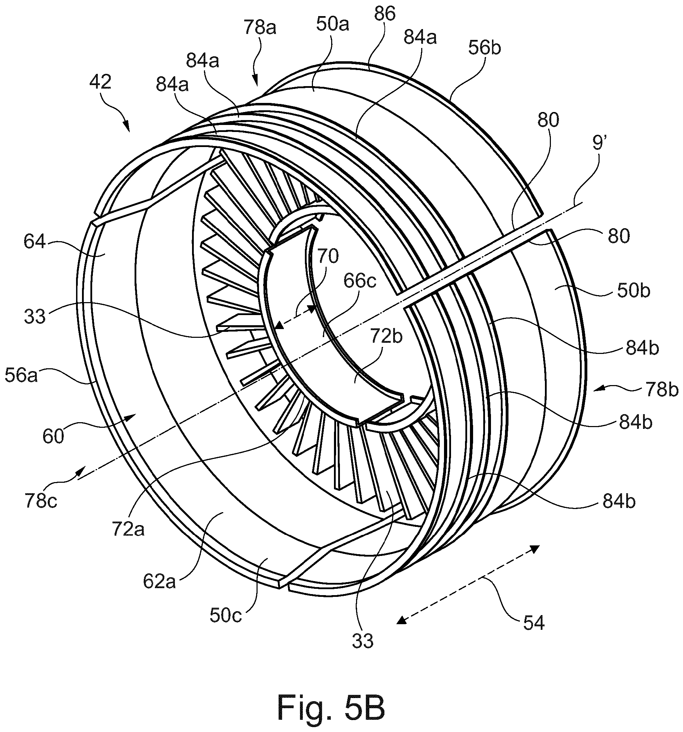

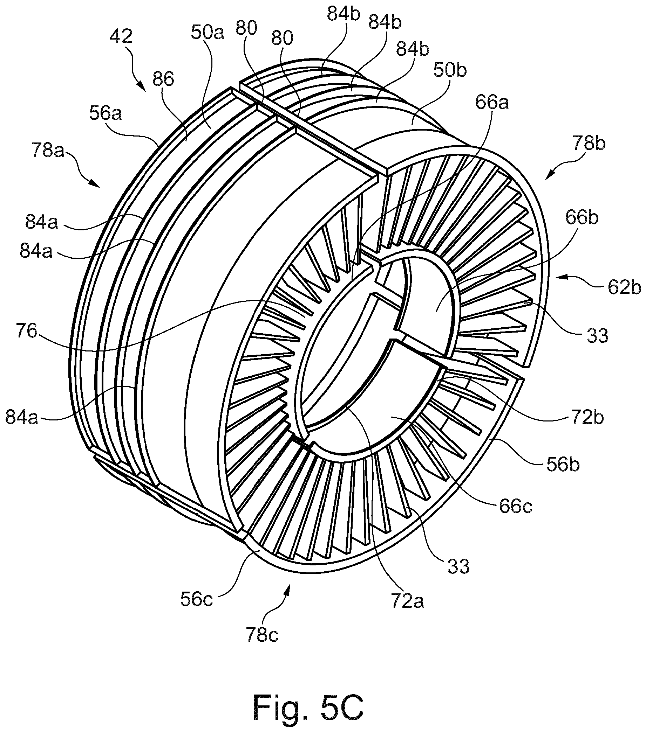

As shown in Figures 5B and 5C each portion 50a,b,c of the outer wall extends from the first end 56a of the outer wall 50 to the second end 56b of the outer wall 50, and each portion 66a,b,c of the inner wall extends from the first end 72a of the inner wall 66 to the second end 72b of the inner wall 66. However, each portion 50a,b,c, 66a,b,c, of the outer and inner walls 50, 66 only forms part of the perimeter 58, 74 of the respective walls 50, 66. Therefore, each segment extends the full length of the fan case module 35, but only part of the circumference. As such, the segments 78a,b,c may be considered longitudinal segments 78a,b,c.

The longitudinal segments 78a,b,c can be joined together to form an assembled fan case module 35. Thus, the portions 50a,b,c of the outer wall 50 align radially and axially to form the outer wall 50, and the portions 66a,b,c of the inner wall align radially and axially to form the inner wall 66.

In the example shown in Figures 5A to 5C, each longitudinal segment 78a,b,c forms the same arc size (120 degrees around the axis 9'). The portions 50a,b,c of the outer wall 50 and the portions 66a,b,c of the inner wall 66 are also circumferentially aligned around the axis 9', such that joints between the portions 50a,b,c of the outer wall 50 and joints between the portions 66a,b,c of the inner wall 66 are aligned along a direction extending radially from the axis 9'.

In order to join the longitudinal segments 78a,b,c, axially extending flanges 80 are formed on the edges of the portions 50a,b,c of the outer wall 50. The flanges 80 can be bolted together to join the longitudinal segments 78a,b,c. Furthermore, optionally, a support ring 82 may be provided. The support ring 82 is formed of a continuous ring. Each of the portions 66a,b,c of the inner wall 66 may be fixed to the support ring 82, such that it provides further joint strength and hoop continuity to the fan case 42. In some examples, but not all, the support ring 82 may be used to fix the fan case module to the engine core module 11.

The support ring 82 may be provided at the first end 72a or second end 72b of the inner wall 66. Optionally, support rings 82 may be provided at both ends 72a,b.

The assembled engine 10 includes a number of annularly extending strengthening ribs 84 formed in an outer surface 86 of the outer wall 50, opposing the inner surface 64. The ribs 84 extend circumferentially around the axis 9'. The strengthening ribs 84 provide additional strength to the fan case 42. Each portion 50a,b,c of the outer wall 50 includes portions 84a,b,c of the ribs 84, which align in the axial direction to form the completed ribs 84 in the assembled fan case 42.

Typically a fan case 42 of an engine is formed of one or more parts that each are continuous around the perimeter of the fan case 42. In some examples, separate portions, each forming the full circumference and part of the length of the fan case 42, may be joined along the length of the fan case 42. The fan case 42 described in relation to Figures 5A to 5C, on the other hand, is formed of longitudinal segments 78,a,b,c that are discontinuous around the circumference of the fan case 42, such that segments form incomplete portions of the perimeter.

For fan cases larger than 3.5m (around 137 inches) in diameter 52, especially those larger than 3.58m (around 141 inches) in diameter 52, the fan case module 35 incorporating a longitudinally segmented fan case 42 is more convenient to store and transport. The fan case module 35 incorporating a longitudinally segmented fan case 42 may also be more convenient to store and transport for fan cases larger than 3.4m (around 134 inches) in diameter 52.

For example, in one scenario, an engine 10 may have a fan case 42 that is continuous around its perimeter. However, in some situations, damage may occur to the fan case 42 or other components of the fan case module 35 that requires replacement of the fan case module 35 in situ. In some cases, the aircraft may be in a location where delivery of a fan case module 35 that has a fan case 42 that is continuous around its perimeter will take a long time, or is not possible (for example, a cargo plane of sufficient size to carry the case 42 may not be able to land).

In such a situation, a longitudinally segmented fan case module 35 may be delivered because it is formed of smaller longitudinal segments 78. The longitudinally segmented fan case module 35 may then be fitted, and used for a single "rescue" flight, with no passengers, to move the aircraft to a location where a replacement can be delivered. The replacement fan case module 35 may again be continuous around the perimeter of the fan case 42.

In other examples, the longitudinally segmented fan case module 35may be used for multiple flights, with or without passengers.

The fan case module 35may be used with any engine core module 11 and fan module 23 of appropriate size.

In the above example, the longitudinally segmented fan case module 35 is formed of three longitudinal segments 78a,b,c. However, it will be appreciated that the fan case module 35 may be formed of any number of longitudinal segments 78, in particular, two or more longitudinal segments 78. In some cases, the fan case module 35 may be formed of between three and five longitudinal segments 78 to provide longitudinal segments that are easily transportable, but maintain strength of the fan case 42.

In the examples discussed above, the longitudinal segments 78a,b,c are of equal size around the circumference of the fan case 42, each forming an arc of 120 degrees of the fan case perimeter 58. However, it will be appreciated that the fan case 42 may be split into unequally sized longitudinal segments, forming different angles.

In the example discussed above, the portions 50a,b,c of the outer wall 50 and the portions 66a,b,c of the inner wall 66 are aligned around the circumference. However, this may not be the case, and the portions 50a,b,c of the outer wall 50 and the portions 66a,b,c of the inner wall 66 may be stepped around the circumference, such that the joins between the portions 50a,b,c, 66a,b, do not align in a direction extending radially from the axis 9'.

Furthermore, in the examples discussed above, the arc formed by the portions 50a,b,c of the outer wall 50 in each longitudinal segment 78a,b,c is the same as the arc formed by the portion 66a,b,c of the inner wall 66. However, in other examples, this may not be the case, and the inner wall 66 may be split between the different longitudinal segments 78 in a different way to the outer wall 50.

In the examples discussed above, the segments 78a,b,c of fan case module 35 each extend the full length of the fan case 42. Thus the fan case module 35 can be considered to be formed of a single sector extending the full length of the fan case 42. In other examples not belonging to the invention, the fan case module 35 may be formed of two or more sectors (not shown) each forming part of the length of the fan case 42. Each sector is then formed of two or more segments 78a,b,c, as discussed above.

In the example with two or more sectors, each formed of two or more segments, the sectors can be joined by bolted annular flanges arranged at the interface between two sectors. Furthermore, the joints between the segments 78a,b,c in adjacent sectors may be aligned offset around the circumference of the fan case 42. In addition, the different sectors may be split into segments in different ways to each other.

In the above example, the longitudinal segments 78a,b,c are joined by bolted flanges 80. However, it will be appreciated that any other method may be used to join the longitudinal segments 78a,b,c. For example pinned 'hinge' joints, v-bands and latches/clamps are also possible alternatives. The longitudinal segments 78a,b,c may also incorporate positioning features (e.g. dowels, spigots) to ensure correct alignment. Similarly, any suitable joint may be used to join sectors, where multiple sectors are provided.

Joints formed by bolted flanges or other means may be provided between portions 50a,b,c of the outer wall 50 and/or between portions 66a,b,c of the inner wall 66. Furthermore, in some examples, further connection points may be provided by splitting an outlet guide vane 33 or radially extending support strut between adjacent longitudinal segments 78, so that a complete vane 33 or strut is formed when the longitudinal segments 78 are assembled, and further bolts or other connections can be provided through the vane 33 or strut.

The longitudinal segments 78 may include the liner panels (now shown), or some or all of the liner panels may be provided separately, for connection after the fan case 42 is assembled. In some cases, joints between panels of liner may align with joints between longitudinal segments 78a,b,c. However, in other cases, the liner panels may overlap the joints between the longitudinal segments 78a,b,c.

In the assembled engine 10, the second end 72b of the inner wall 66 may align with the second end 56b of the outer wall 50, as discussed above. Alternatively, the second end 72b of the inner wall 66 may be axially in front of the second end 56b of the outer wall 50 (i.e. within the passage 60) or axially behind it (i.e. the inner wall 66 extends outside the second end 56b of the outer wall 50)

The inner wall 66 may form a hub for the radially inner ends of the outlet guide vanes 33. At the opposite, radially outer, end of the outlet guide vanes 33, the vanes 33 may be connected directly to the outer wall 50, or to an outer hub, which is in turn connected to the outer wall 50. The outer hub is also split between the longitudinal segments 78 of the fan case module 35.

In some examples, the outlet guide vanes 33 and the inner wall 66 may not be incorporated in the fan case module 35, such that the fan case module 35 includes only the outer wall 50. The guide vanes 33 and inner wall 66 may be provided separately, or may be part of the engine core module 11. In further examples, some of the vanes 33 may be provided on the engine core module 11, and some of vanes 33 may be provided in the fan case module 35. In yet further examples, the vanes 33 may be split in a radial direction, such that each vane 33 includes a portion extending from the fan case 42, as part of the fan case module 35, and a portion extending from the engine core 11 as part of the engine core module 11. A bolted joint or similar, formed along the radial length of the vanes 33.

In Figures 5A to 5C, the inner wall 66 and outer wall 50 are substantially cylindrical in shape. This is by way of example only. The walls 50, 66 and thus the fan case module 35 may be any suitable shape, and the diameter of the walls 50, 66 may vary along their length. The fan case module 35 may also be any size.

Although the fan case module 35 has been described in relation to a modular geared gas turbine engine 10 for an aircraft, it may be used on any suitable gas turbine engine, including non-geared and/or non-modular engines.

It will be understood that the invention is not limited to the embodiments above-described and various modifications and improvements can be made without departing from the concepts described herein within the scope of the following claims.

## Claims

1. A fan case (42) for a gas turbine aircraft engine (10), the fan case (42) formed of an outer wall (50) extending in a loop around an axis (9') and along the axis (9'), and having a case length (54) along the axis (9'), and a case perimeter (58) around the axis (9'), wherein the fan case (42) comprises two or more longitudinal segments (78a,b,c) configured to be assembled to form the outer wall (50), wherein each longitudinal segment (78a,b,c) includes a portion (50a,b,c) of the outer wall (50) extending at least part of the length (54) of the fan case (42) and forming an incomplete portion of the perimeter (58) of the fan case (42) and **characterised in that** each longitudinal segment (78a,b,c) extends the full length of the fan case (42), and wherein the outer wall (50) includes one or more strengthening ribs (84), each strengthening rib (84) extending around the axis (9').

2. The fan case (42) of claim 1, wherein:
each strengthening rib (84) is formed of two or more rib portions (84a,b,c) formed on the longitudinal segments (78a,b,c); and
the rib portions (84a,b,c) on adjacent longitudinal segments (78a,b,c) align to form the strengthening rib (84) in a loop around the axis (9').

3. The fan case (42) of claim 1 or 2, comprising outlet guide vanes (33) for a bypass duct (22) of the gas turbine engine (10) extending radially inward from the outer wall (50) of each longitudinal segment (78a,b,c).

4. The fan case (42) of claim 3, comprising:
an inner wall portion (66a,b,c) at a radially inner end of the outlet guide vanes (33) of each longitudinal segment (78a,b,c);
wherein the inner wall portions (66a,b,c) of adjacent longitudinal segments (78a,b,c) align to form an inner wall (66) arranged radially within the outer wall (50), the inner wall (66) having a perimeter (74) extending in a loop around the axis (9') and a length (70) along the axis (9'); and
wherein each inner wall portion (66a,b,c) comprises an incomplete portion of the perimeter (74) of the inner wall (66).

5. The fan case (42) of claim 4, comprising a continuous support ring (82) arranged to hold the longitudinal segments (78a,b,c) together, the support ring (82) having a dimension corresponding to the inner wall (66), in a plane perpendicular to the axis (9').

6. The fan case (42) of any preceding claim, wherein the complete perimeter is formed by three or more longitudinal segments (78a,b,c).

7. The fan case (42) of any preceding claim, comprising five longitudinal segments (78a,b,c) or less.

8. The fan case (42) of any preceding claim, wherein the longitudinal segments (78a,b,c) form equal portions of the perimeter of the outer wall (50).

9. The fan case (42) of any preceding claim, wherein each longitudinal segment (78a,b,c) comprises flanges (80) at opposing axially extending sides of the portion (50a,b,c) of the outer wall (50), for joining to adjacent longitudinal segments (78a,b,c).

10. The fan case (42) of any preceding claim, wherein the outer wall (50) has a diameter (52) of greater than 3.5 metres, and may have a diameter (52) of greater than 3.4 metres, and may have a diameter (52) of greater than 3.58 metres.

11. The fan case (42) of any preceding claim, wherein the fan case (42) comprises a rescue fan case (42) for a single flight.

12. A gas turbine engine (10) for an aircraft comprising:
an engine core (11) comprising a turbine (19), a compressor (14), and a core shaft (26) connecting the turbine (19) to the compressor (14);
a fan (23), the fan (23) comprising a plurality of fan blades (25);
a fan case (42) according to any preceding claim, arranged around the fan (23) and at least partially defining a bypass duct (22) between the fan case (42) and the engine core (11); and
a gearbox (30) that receives an input from the core shaft (26) and outputs drive to the fan (23) so as to drive the fan (23) at a lower rotational speed than the core shaft (26).

13. The gas turbine engine (10) according to 12, wherein:
the turbine is a first turbine (19), the compressor is a first compressor (14), and the core shaft is a first core shaft (26);
the engine core (11) further comprises a second turbine (17), a second compressor (15), and a second core shaft (27) connecting the second turbine (17) to the second compressor (15); and
the second turbine (17), second compressor (15), and second core shaft (27) are arranged to rotate at a higher rotational speed than the first core shaft (26).

14. A method of replacing a fan case (42) on a gas turbine engine (10) of an aircraft, comprising:
transporting a fan case (42) according to claim 11 to a location of the aircraft;
assembling the longitudinal segments (78a,b,c) to form the rescue fan case (42); and
replacing a fan case (42) of the gas turbine engine (10) with the rescue fan case (42).

## Patentansprüche

1. Lüftergehäuse (42) für ein Gasturbinenluftfahrzeugtriebwerk (10), wobei das Lüftergehäuse (42) aus einer Außenwand (50) gebildet ist, die sich in einer Schleife um eine Achse (9') und entlang der Achse (9') erstreckt, und eine Gehäuselänge (54) entlang der Achse (9') und einen Gehäuseumfang (58) um die Achse (9') aufweist, wobei das Lüftergehäuse (42) zwei oder mehr Längssegmente (78a,b,c) umfasst, die konfiguriert sind, um zusammengebaut zu werden, um die Außenwand (50) zu bilden, wobei jedes Längssegment (78a,b,c) einen Abschnitt (50a,b,c) der Außenwand (50) beinhaltet, der sich zumindest einen Teil der Länge (54) des Lüftergehäuses (42) erstreckt und einen unvollständigen Abschnitt des Umfangs (58) des Lüftergehäuses (42) bildet und **dadurch gekennzeichnet, dass** sich jedes Längssegment (78a,b,c) die volle Länge des Lüftergehäuses (42) erstreckt, und wobei die Außenwand (50) eine oder mehrere Verstärkungsrippen (84) beinhaltet, wobei sich jede Verstärkungsrippe (84) um die Achse (9') erstreckt.

2. Lüftergehäuse (42) nach Anspruch 1, wobei:
jede Verstärkungsrippe (84) aus zwei oder mehr Rippenabschnitten (84a,b,c) gebildet ist, die an den Längssegmenten (78a,b,c) gebildet sind; und
die Rippenabschnitte (84a,b,c) an benachbarten Längssegmenten (78a,b,c) ausgerichtet sind, um die Verstärkungsrippe (84) in einer Schleife um die Achse (9') zu bilden.

3. Lüftergehäuse (42) nach Anspruch 1 oder 2, umfassend Auslassleitschaufeln (33) für einen Umgehungskanal (22) des Gasturbinentriebwerks (10), die sich radial einwärts von der Außenwand (50) jedes Längssegments (78a,b,c) erstrecken.

4. Lüftergehäuse (42) nach Anspruch 3, umfassend:
einen Innenwandabschnitt (66a,b,c) an einem radial inneren Ende der Auslassleitschaufeln (33) jedes Längssegments (78a,b,c);
wobei die Innenwandabschnitte (66a,b,c) von benachbarten Längssegmenten (78a,b,c) ausgerichtet sind, um eine Innenwand (66) zu bilden, die radial innerhalb der Außenwand (50) angeordnet ist, wobei die Innenwand (66) einen Umfang (74) aufweist, der sich in einer Schleife um die Achse (9') und eine Länge (70) entlang der Achse (9') erstreckt; und
wobei jeder Innenwandabschnitt (66a,b,c) einen unvollständigen Abschnitt des Umfangs (74) der Innenwand (66) umfasst.

5. Lüftergehäuse (42) nach Anspruch 4, umfassend einen durchgehenden Stützring (82), der angeordnet ist, um die Längssegmente (78a,b,c) zusammenzuhalten, wobei der Stützring (82) eine Abmessung, die der Innenwand (66) entspricht, in einer Ebene senkrecht zu der Achse (9') aufweist.

6. Lüftergehäuse (42) nach einem vorhergehenden Anspruch, wobei der vollständige Umfang durch drei oder mehr Längssegmente (78a,b,c) gebildet ist.

7. Lüftergehäuse (42) nach einem vorhergehenden Anspruch, umfassend fünf Längssegmente (78a,b,c) oder weniger.

8. Lüftergehäuse (42) nach einem vorhergehenden Anspruch, wobei die Längssegmente (78a,b,c) gleiche Abschnitte des Umfangs der Außenwand (50) bilden.

9. Lüftergehäuse (42) nach einem vorhergehenden Anspruch, wobei jedes Längssegment (78a,b,c) Flansche (80) an gegenüberliegenden sich axial erstreckenden Seiten des Abschnittes (50a,b,c) der Außenwand (50) zum Anschließen an benachbarte Längssegmente (78a,b,c) umfasst.

10. Lüftergehäuse (42) nach einem vorhergehenden Anspruch, wobei die Außenwand (50) einen Durchmesser (52) von mehr als 3,5 Metern aufweist und einen Durchmesser (52) von mehr als 3,4 Metern aufweisen kann und einen Durchmesser (52) von mehr als 3,58 Metern aufweisen kann.

11. Lüftergehäuse (42) nach einem vorhergehenden Anspruch, wobei das Lüftergehäuse (42) ein Rettungslüftergehäuse (42) für einen Einzelflug umfasst.

12. Gasturbinentriebwerk (10) für ein Luftfahrzeug, umfassend:
einen Triebwerkskern (11), der eine Turbine (19), einen Verdichter (14) und eine Kernwelle (26) umfasst, welche die Turbine (19) mit dem Verdichter (14) verbindet;
einen Lüfter (23), wobei der Lüfter (23) eine Vielzahl von Lüfterschaufeln (25) umfasst;
ein Lüftergehäuse (42) nach einem vorhergehenden Anspruch, das um den Lüfter (23) angeordnet ist und zumindest teilweise einen Umgehungskanal (22) zwischen dem Lüftergehäuse (42) und dem Triebwerkskern (11) definiert; und
ein Getriebe (30), das eine Eingabe von der Kernwelle (26) empfängt und Antrieb an den Lüfter (23) ausgibt, um den Lüfter (23) bei einer niedrigeren Drehzahl als die Kernwelle (26) anzutreiben.

13. Gasturbinentriebwerk (10) nach Anspruch 12, wobei:
die Turbine eine erste Turbine (19) ist, der Verdichter ein erster Verdichter (14) ist und die Kernwelle eine erste Kernwelle (26) ist;
der Triebwerkskern (11) ferner eine zweite Turbine (17), einen zweiten Verdichter (15) und eine zweite Kernwelle (27) umfasst, welche die zweite Turbine (17) mit dem zweiten Verdichter (15) verbindet; und
die zweite Turbine (17), der zweite Verdichter (15) und die zweite Kernwelle (27) angeordnet sind, um sich bei einer höheren Drehzahl als die erste Kernwelle (26) zu drehen.

14. Verfahren zum Ersetzen eines Lüftergehäuses (42) an einem Gasturbinentriebwerk (10) eines Luftfahrzeugs, umfassend:
Transportieren eines Lüftergehäuses (42) nach Anspruch 11 zu einem Ort des Luftfahrzeugs;
Zusammenbauen der Längssegmente (78a,b,c), um das Rettungslüftergehäuse (42) zu bilden; und
Ersetzen eines Lüftergehäuses (42) des Gasturbinentriebwerks (10) durch das Rettungslüftergehäuse (42).

## Revendications

1. Carter de soufflante (42) pour un moteur d'aéronef à turbine à gaz (10), le carter de soufflante (42) formé d'une paroi externe (50) s'étendant en une boucle autour d'un axe (9') et le long de l'axe (9'), et possédant une longueur de carter (54) le long de l'axe (9') et un périmètre de carter (58) autour de l'axe (9'), ledit carter de soufflante (42) comprenant au moins deux segments longitudinaux (78a,b,c), ou plus, conçus pour être assemblés pour former la paroi externe (50), chaque segment longitudinal (78a,b,c) comprenant une partie (50a,b,c) de la paroi externe (50) s'étendant sur au moins une partie de la longueur (54) du carter de soufflante (42) et formant une partie incomplète du périmètre (58) du carter de soufflante (42) et **caractérisé en ce que** chaque segment longitudinal (78a,b,c) s'étend sur toute la longueur du carter de soufflante (42), et ladite paroi externe (50) comprenant une ou plusieurs nervures de renforcement (84), chaque nervure de renforcement (84) s'étendant autour de l'axe (9').

2. Carter de soufflante (42) selon la revendication 1,
chaque nervure de renforcement (84) étant formée de deux parties de nervure (84a,b,c), ou plus, formées sur les segments longitudinaux (78a,b,c) ; et
lesdites parties de nervure (84a,b,c) sur les segments longitudinaux adjacents (78a,b,c) s'alignant pour former la nervure de renforcement (84) en une boucle autour de l'axe (9').

3. Carter de soufflante (42) selon la revendication 1 ou 2, comprenant des aubes directrices de sortie (33) pour un conduit de dérivation (22) du moteur à turbine à gaz (10) s'étendant radialement vers l'intérieur à partir de la paroi externe (50) de chaque segment longitudinal (78a,b,c).

4. Carter de soufflante (42) selon la revendication 3, comprenant :
une partie de paroi interne (66a,b,c) au niveau d'une extrémité radialement interne des aubes directrices de sortie (33) de chaque segment longitudinal (78a,b,c) ;
lesdites parties de paroi interne (66a,b,c) des segments longitudinaux adjacents (78a,b,c) s'alignant pour former une paroi interne (66) agencée radialement à l'intérieur de la paroi externe (50), la paroi interne (66) possédant un périmètre (74) s'étendant en une boucle autour de l'axe (9') et sur une longueur (70) le long de l'axe (9') ; et
chaque partie de paroi interne (66a,b,c) comprenant une partie incomplète du périmètre (74) de la paroi interne (66).

5. Carter de soufflante (42) selon la revendication 4, comprenant un anneau de support continu (82) agencé pour maintenir les segments longitudinaux (78a,b,c) ensemble, l'anneau de support (82) possédant une dimension correspondant à la paroi interne (66), dans un plan perpendiculaire à l'axe (9').

6. Carter de soufflante (42) selon une quelconque revendication précédente, ledit périmètre complet étant formé de trois segments longitudinaux (78a,b,c), ou plus.

7. Carter de soufflante (42) selon une quelconque revendication précédente, comprenant cinq segments longitudinaux (78a,b,c) ou moins.

8. Carter de soufflante (42) selon une quelconque revendication précédente, lesdits segments longitudinaux (78a,b,c) formant des parties égales du périmètre de la paroi externe (50).

9. Carter de soufflante (42) selon une quelconque revendication précédente, chaque segment longitudinal (78a,b,c) comprenant des brides (80) sur des côtés opposés s'étendant axialement de la partie (50a,b,c) de la paroi externe (50), pour se joindre à des segments longitudinaux adjacents (78a,b,c).

10. Carter de soufflante (42) selon une quelconque revendication précédente, ladite paroi externe (50) possédant un diamètre (52) supérieur à 3,5 mètres, et pouvant avoir un diamètre (52) supérieur à 3,4 mètres, et pouvant avoir un diamètre (52) supérieur à 3,58 mètres.

11. Carter de soufflante (42) selon une quelconque revendication précédente, ledit carter de soufflante (42) comprenant un carter de soufflante de secours (42) pour un seul vol.

12. Moteur à turbine à gaz (10) pour un aéronef comprenant :
un noyau de moteur (11) comprenant une turbine (19), un compresseur (14) et un arbre de noyau (26) reliant la turbine (19) au compresseur (14) ;
une soufflante (23), la soufflante (23) comprenant une pluralité de pales (25) de soufflante ;
un carter de soufflante (42) selon une quelconque revendication précédente, agencé autour de la soufflante (23) et définissant au moins partiellement un conduit de dérivation (22) entre le carter de soufflante (42) et le noyau de moteur (11) ; et
une boîte d'engrenage (30) qui reçoit une entrée en provenance de l'arbre central (26) et délivre en sortie l'entraînement à la soufflante (23) de façon à entraîner la soufflante (23) à une vitesse de rotation inférieure à celle de l'arbre central (26).

13. Moteur à turbine à gaz (10) selon la revendication 12,
ladite turbine étant une première turbine (19), ledit compresseur étant un premier compresseur (14) et ledit arbre de noyau étant un premier arbre de noyau (26) ;
ledit noyau de moteur (11) comprenant en outre une seconde turbine (17), un second compresseur (15) et un second arbre de noyau (27) reliant la seconde turbine (17) au second compresseur (15) ; et
ladite seconde turbine (17), ledit second compresseur (15) et ledit second arbre de noyau (27) étant agencés pour tourner à une vitesse de rotation plus élevée que le premier arbre de noyau (26).

14. Procédé de remplacement d'un carter de soufflante (42) sur un moteur à turbine à gaz (10) d'un aéronef, comprenant :
le transport d'un carter de soufflante (42) selon la revendication 11 jusqu'à un emplacement de l'aéronef ; l'assemblage des segments longitudinaux (78a,b,c) pour former le carter de soufflante de secours (42) ; et
le remplacement d'un carter de soufflante (42) du moteur à turbine à gaz (10) par le carter de soufflante de secours (42).
